# FASCICULE DE BREVET EUROPEEN

(11) **EP 1 409 571 B1**
(45) Date de publication et mention de la délivrance du brevet: **18.05.2016**
(21) Numéro de dépôt: 02767571.9
(22) Date de dépôt: 15.07.2002
(51) Int. Cl.: C08J 3/00, C08J 3/075, C08F 293/00

(54) **COMPOSITIONS AQUEUSES COMPRENANT UN MICROGEL CHIMIQUE ASSOCIE A UN POLYMERE AQUEUX**
WÄSSRIGE ZUSAMMENSETZUNGEN ENTHALTEND EIN CHEMISCHES MIKROGEL VERBUNDEN MIT EINEM WÄSSRIGEN POLYMEREN
AQUEOUS COMPOSITIONS COMPRISING A CHEMICAL MICROGEL ASSOCIATED WITH AN AQUEOUS POLYMER

(30) Priorité: 13.07.2001 FR 0109387
(43) Date de publication de la demande: 21.04.2004
(73) Titulaire: RHODIA CHIMIE, 92512 Boulogne Billancourt Cedex (FR)
(72) Inventeur: BAVOUZET, Bruno, F-75010 PARIS (FR); DESTARAC, Mathias, F-75005 PARIS (FR)
(74) Mandataire: Blot, Philippe Robert Emile
(86) Numéro de dépôt international: PCT/FR2002/002512
(87) Numéro de publication internationale: WO 2003/006532

(56) Documents cités:
- EP-A- 0 170 394
- DE-A- 4 206 827
- FR-A- 2 647 364

## Description

La présente invention a pour objet des compositions aqueuses comprenant des particules de microgel chimique associées à au moins un polymère pontant, qui sont plus particulièrement sous forme de fluide visqueux ou de gel.

Elle concerne de même la préparation de telles compositions aqueuses, ainsi que leurs utilisations et les formulations les comprenant.

On connaît essentiellement deux types de gels, les gels chimiques et les gels physiques. L'un des principaux intérêts des gels chimiques réside dans le fait qu'ils présentent des modules élastiques relativement importants ; une bonne tenue lors de variations de température. De plus, ils peuvent posséder une sensibilité faible vis-à-vis de l'introduction d'additifs classiques comme les bases, les acides, les tensioactifs, etc. Ces systèmes sont cependant non réversibles au cisaillement, ce qui limite fortement leur utilisation. En effet, dans les applications courantes, les gels sont utilisés sous cisaillement par l'utilisateur qui souhaite retrouver en l'absence de cisaillement, la viscosité initiale du gel. Or les gels chimiques ne présentent pas de telles caractéristiques.

Cette caractéristique de réversibilité, au moins partielle, existe pour les gels physiques. En effet, après avoir subi un cisaillement, ils présentent la capacité de retrouver la viscosité du fluide avant l'opération de cisaillement. En outre, bien souvent ces gels présentent un profil rhéologique de type rhéofluidifiant (la viscosité du gel diminue avec un cisaillement croissant). La difficulté est que ces gels voient leurs caractéristiques rhéologiques modifiées de manière incontrôlée s'ils sont soumis à des variations extérieures de température et éventuellement de composition chimique (par ajout de tiers composés) etc. Par ailleurs, ces gels sont en réalité des fluides viscoélastiques qui présentent une propriété de gel aux temps courts mais des caractéristiques visqueuses aux temps longs.

EP 170394 décrit une composition sous forme de gel comprenant des particules d'un polymère de haute masse, dispersée dans un milieu aqueux. Toutefois, EP170394 ne divulgue pas de microgel chimique réticulé. US 4059552 décrit des compositions comprenant un polymère réticulé gonflant dans l'eau et un latex. Toutefois, US 4059552 ne décrit pas de polymère pontant. DE 4206826 décrit un matériau d'isolation pour basses températures, comprenant un gel absorbant l'eau d'un polymère insoluble dans l'eau et un gel aqueux d'un polymère hydrosoluble. La viscosité du gel est dépendante du cisaillement, de la composition et de la dilution de la solution.

L'un des objets de la présente invention est de proposer un gel qui allie les caractéristiques de stabilité non seulement des gels de type chimique, mais aussi de type physique. Il est décrit une composition aqueuse comprenant des particules de microgel chimique hydrosoluble ou hydrodispersable, associées à au moins un polymère pontant hydrosoluble ou hydrodispersable, de composition chimique différente de celle des particules précitées ; la quantité en particules de microgel chimique étant comprise entre 0,05 et 40 % en poids sec de la composition et la quantité en polymère pontant étant telle que la viscosité de la composition est au moins supérieure à trois fois, de préférence supérieure ou égale à dix fois, celle d'une solution aqueuse de particules de microgel chimique et à celle d'une solution aqueuse de polymère pontant, dans les mêmes conditions.

Ces buts et d'autres sont atteints par la présente invention qui a donc pour objet une composition aqueuse comprenant des particules de microgel chimique, réticulé chimiquement, hydrosoluble ou hydrodispersable, associées à au moins un polymère pontant hydrosoluble ou hydrodispersable, de composition chimique différente de celle des particules précitées ;
- la quantité en particules de microgel chimique étant comprise entre 0,05 et 40 % en poids sec de la composition ;
- les particules de microgel chimique et le polymère pontant étant associés :
   ∘ par des interactions électrostatiques : la charge globale des particules de microgel chimique étant opposée à la charge globale de polymère pontant ; ou
   ∘ par des interactions de type hydrophobe-hydrophobe : les particules de microgel chimique et le polymère pontant comprenant des motifs susceptibles de s'associer en phase aqueuse par le moyen de telles interactions ; ou
   ∘ par des interactions de type liaisons hydrogène : les particules de microgel chimique et le polymère pontant comprenant des motifs susceptibles de s'associer en phase aqueuse par le moyen de telles liaisons ; et
- la quantité en polymère pontant étant telle que la viscosité de la composition est au moins supérieure à trois fois, de préférence supérieure ou égale à dix fois, celle d'une solution aqueuse de particules de microgel chimique et à celle d'une solution aqueuse de polymère pontant, dans les mêmes conditions.

La présente invention a de même pour objet un premier procédé de préparation de ladite composition dans lequel : a) on prépare, en phase aqueuse, un gel chimique par polymérisation du ou des monomères souhaités et de l'agent réticulant, ou par réticulation post-polymérisation chimique d'un polymère, b) on broie le gel résultant de manière à obtenir des particules de microgel chimique ; c) on met en contact, dans une phase aqueuse, lesdites particules de microgel chimique avec au moins un polymère pontant.

Elle concerne un deuxième procédé de préparation de la composition dans lequel on met en oeuvre les étapes suivantes : a) on prépare des particules de microgel chimique en effectuant une polymérisation du ou des monomères souhaités et de l'agent réticulant dans des micro-réacteurs et/ou sous agitation et/ou en présence d'au moins un agent limitant, ou par réticulation post-polymérisation chimique, dans des micro-réacteurs et/ou sous agitation, d'un polymère, b) on met en contact, dans une phase aqueuse, lesdites particules de microgel chimique avec au moins un polymère pontant.

La composition selon l'invention présente l'avantage de former un gel qui est au moins partiellement réversible, voire totalement. Le profil rhéologique de la composition aqueuse est généralement du type rhéofluidifiant. Ainsi, lorsque la composition est soumise à un cisaillement, la viscosité diminue et l'on constate une ré-augmentation de la viscosité, voire un retour à la valeur de la viscosité initiale à l'arrêt du cisaillement.

Dans le cas où le profil rhéologique serait de nature rhéoépaississante, la réversibilité se traduirait également par une ré-diminution de la viscosité, voire un retour à la valeur de la viscosité initiale après l'arrêt du cisaillement. En outre, la composition selon l'invention forme un gel qui conserve mieux ses propriétés rhéologiques dans des conditions contraignantes de température sous cisaillement par exemple, tandis que des gels classiques physiques les perdent.

Il est par ailleurs à noter, et cela constitue un avantage certain, que selon la nature des particules de microgel et de polymère pontant, le comportement rhéologique de la composition peut être adapté en fonction du pH (gel stimulable au pH-pH responsive gels).

Mais d'autres caractéristiques et avantages de la présente invention apparaîtront plus clairement à la lecture de la description et de l'exemple qui vont suivre.

Il est à noter que la composition aqueuse selon l'invention peut se présenter sous la forme d'un gel. Par gel, on désigne plus précisément des compositions qui présentent un module élastique (G') supérieur ou égal au module de perte (G") sur une gamme de fréquence comprise entre 1 et 10 Hz, avec une géométrie de type cône-plan ; les modules étant mesurés dans le régime linéaire de viscoélasticité, à 25°C, avec un Rhéomètre Rheometrics ou Carrimed.

De plus, sauf indication contraire, les viscosités sont mesurées au moyen d'un viscosimètre de type Carrimed, avec une géométrie à cône-plan ; les mesures sont effectuées à 25°C à un gradient de cisaillement de 1 s⁻¹.

Par ailleurs, dans ce qui suit, les conditions de température, de pH de la composition concernent la composition en tant que telle avant son utilisation, que celle-ci ne comprenne que le copolymère et l'espèce chargée, ou bien qu'elle soit associée à divers autres constituants nécessaires pour obtenir des formulations complètes. Ces "conditions" peuvent aussi concerner la composition durant son utilisation, plus spécifiquement durant l'utilisation de la formulation complète.

Il est précisé de plus que le terme polymères désigne à la fois les homopolymères ou les copolymères.

Le polymère pontant est dit hydrosoluble ou hydrodispersable lorsque que l'on n'observe pas de phénomène de séparation macroscopique de phases lorsqu'il est en solution ou en dispersion dans une phase aqueuse, après une heure dans les mêmes conditions de concentration et de température que celles de la composition selon l'invention.

De plus, par particules de microgel chimique hydrosolubles ou hydrodispersables, sont désignées des particules de polymère réticulé chimiquement et gonflées par une solution aqueuse.

Ainsi que cela a été indiqué auparavant, l'un des premiers constituants de la composition aqueuse selon l'invention est constitué par des particules de microgel chimique hydrosoluble ou hydrodispersable.

Plus particulièrement, la quantité de particules de microgel chimique est comprise entre 0,05 et 10 % en poids sec de la composition, de préférence entre 0,1 et 5 % en poids sec de la composition.

Selon un mode de réalisation avantageux de l'invention, les particules de microgel chimique ont une taille moyenne en nombre comprise entre 0,3 µm et 10 mm, de préférence comprise entre 1 µm et 1000 µm, encore plus préférentiellement comprise entre 1 µm et 100 µm.

La taille moyenne en nombre est déterminée par microscopie optique.

En outre, et tel qu'indiqué auparavant, les particules de microgel chimique sont constituées d'au moins un polymère hydrosoluble ou hydrodispersable réticulé chimiquement.

Ledit polymère peut être obtenu soit directement sous une forme réticulée, par exemple en ajoutant au (x) monomères constituant le polymère, au moins un agent de réticulation, qui se trouve être, dans la plupart des cas, un monomère multifonctionnel.

Ledit polymère peut aussi être obtenu en effectuant une étape de réticulation post-polymérisation chimique, c'est-à-dire une réticulation après l'étape de polymérisation du ou des monomères constituant ledit polymère.

Selon une variante avantageuse de la présente invention, le polymère dont dérive les particules de microgel chimique, est tel que le nombre de motifs hydrosolubles dudit polymère représente au moins 50 % du nombre de motifs du polymère, de préférence d'au moins 80 % en poids du polymère.

Par motif hydrophile, on entend un monomère choisi parmi ceux qui, une fois homopolymérisé avec un degré de polymérisation compris entre 40 et 100, donnent un polymère soluble dans les conditions de température et de pH de la composition. Plus particulièrement, la température est comprise entre 15 et 35 °C.

Les polymères dont dérivent les particules de microgel chimique sont obtenus au moins à partir des monomères hydrophiles non ioniques, ioniques ou potentiellement ionisables (notamment selon les conditions de pH).

Plus particulièrement, les monomères hydrophiles non ioniques sont choisis parmi l'oxyde d'éthylène ; les amides des acides mono-ou poly-carboxyliques, linéaires, ramifiés, cycliques ou aromatiques, comprenant au moins une insaturation éthylénique ou dérivés, comme le (méth)acrylamide, le N-méthylol (méth)acrylamide ; certains esters dérivant de l'acide (méth) acrylique comme par exemple le (méth)acrylate de 2-hydroxyéthyle ; les esters vinyliques permettant d'obtenir des blocs alcool polyvinylique après hydrolyse, comme l'acétate de vinyle, le Versatate de vinyle, le propionate de vinyle, la N-vinypyrrolidone, seuls ou en mélange.

En ce qui concerne les monomères hydrophiles ioniques, ou potentiellement ioniques, on peut tout d'abord citer les monomères anioniques ou potentiellement anioniques, portant au moins une fonction carboxylique, sulfonique, sulfurique, phosphonique, phosphorique, sulfosuccinique, les sels correspondants, ou les précurseurs correspondants.

Notamment, les polymères peuvent être obtenus à partir d'au moins un monomère choisi parmi :
- les acides mono-ou poly-carboxyliques linéaires, ramifiés, cycliques ou aromatiques, les dérivés N-substitués de tels acides, les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ; seuls ou en mélanges, leurs dérivés suifoniques ou phosphoniques, les macromonomères dérivant de tels monomères, les sels ou les précurseurs de ces monomères. Il est rappelé que le terme macromonomère désigne une macromolécule portant une ou plusieurs fonctions polymérisables.

A titre d'exemples de monomères convenables figurent plus spécialement :
- l'acide acrylique, l'acide méthacrylique, l'acide fumarique, l'acide itaconique, l'acide citraconique, l'acide maléique, l'acide oléique, l'acide linoléique, l'acide linolénique, l'acide acrylamido glycolique, l'acide 2-propène 1-sulfonique, l'acide méthallyl sulfonique, l'acide styrène sulfonique, l'acide α-acrylamido méthylpropane sulfonique, le 2-sulfoéthylène méthacylate, l'acide sulfopropyl acrylique, l'acide bis sulfopropyl acrylique, l'acide bis-sulfopropyl méthacrylique, l'acide sulfatoéthyl méthacrylique, le monoester phosphate d'acide hydroxyéthyl méthacrylique, ainsi que les sels de métal alcalin, comme le sodium, le potassium, ou d'ammonium ;
- l'acide vinyl sulfonique, l'acide vinylbenzène sulfonique, l'acide vinyl phosphonique, l'acide vinylidène phosphorique, l'acide vinyl benzoïque, ainsi que les sels de métal alcalin, comme le sodium, le potassium, ou d'ammonium ;
- le N-méthacryloyl alanine, le N-acryloyl-hydroxy-glycine ; seuls ou en mélanges, ainsi que les macromonomères dérivant de tels monomères, les sels ou les précurseurs de ces monomères.

Il est à noter que l'on ne sortirait pas du cadre de la présente invention en mettant en oeuvre des monomères précurseurs de ceux qui viennent d'être cités. En d'autres termes, ces monomères présentent des motifs qui, une fois incorporés dans le polymère, peuvent être transformés, notamment par un traitement chimique tel que l'hydrolyse, pour redonner les espèces précitées.

Selon une deuxième possibilité les monomères hydrophiles ioniques, ou potentiellement ioniques, sont choisis parmi les monomères cationiques ou potentiellement cationiques.

A ce titre, on peut mettre en oeuvre, sans intention de s'y limiter :
- les (méth)acrylates d'aminoalkyle, les (méth)acrylamides d'aminoalkyle ;
- les monomères comprenant au moins une fonction amine secondaire, tertiaire ou quaternaire, ou un groupe hétérocyclique contenant un atome d'azote, la vinylamine, l'éthylène imine ;
- les sels d'ammonium de diallyldialkyl ; seuls ou en mélanges, ainsi que les macromonomères dérivant de tels monomères, les sels de ces monomères.

Lesdits monomères peuvent présenter un contre-ion choisi parmi les halogènes, comme le chlore, les sulfates, les hydrosulfates, les alkylsulfates, les phosphates, les citrates, les formates, les acétates.

A titre d'exemples de monomères cationiques susceptibles d'entrer dans la composition des blocs cationiques du copolymère, on peut citer :
- diméthyl amino éthyl (méth) acrylate, diméthyl amino propyl (méth) acrylate le ditertiobutyl aminoéthyl (méth) acrylate, le diméthyl amino méthyl (méth) acrylamide, le diméthyl amino propyl (méth) acrylamide ;
- l'éthylène imine, la vinylamine, la 2-vinylpyridine, la 4-vinylpyridine ;
- le chlorure de triméthylammonium éthyl (méth) acrylate, le méthyl sulfate de triméthylammonium éthyl acrylate, le chlorure de benzyl diméthylammonium éthyl (méth) acrylate, le chlorure de 4-benzoylbenzyl diméthyl ammonium éthyl acrylate, le chlorure de triméthyl ammonium éthyl (méth) acrylamido, le chlorure de triméthyl ammonium de vinylbenzyl ;
- le chlorure d'ammonium de diallyldiméthyl seuls ou en mélanges, ainsi que les macromonomères dérivant de tels monomères.

On ne sortirait pas du cadre de la présente invention en utilisant un ou plusieurs monomères amphotères, qui selon les conditions de pH apporteront une charge nette positive, négative ou nulle. De même on peut utiliser un ou plusieurs monomères du type zwiterrionique, qui possèdent une charge nette nulle quel que soit le pH.

De plus, les polymères dont dérivent les particules de microgel chimique peuvent être obtenus éventuellement à partir des monomères hydrophobes.

Plus particulièrement, les monomères hydrophobes sont choisis parmi :
- l'oxyde de propylène, l'oxyde de butylène, - les esters des acides mono-ou poly-carboxyliques, linéaires, ramifiés, cycliques ou aromatiques, comprenant au moins une insaturation éthylénique,
- les nitriles αβ-éthyléniquement insaturés, les éthers vinyliques, les esters vinyliques, les monomères vinylaromatiques, les halogénures de vinyle ou de vinylidène,
- les monomères hydrocarbonés, linéaires ou ramifiés, aromatiques ou non, comprenant au moins une insaturation éthylénique, seuls ou en mélanges, ainsi que les macromonomères dérivant de tels monomères.

A titre d'exemples particuliers de monomères hydrophobes utilisables dans la préparation du polymères, on peut citer :
- l'oxyde de propylène, l'oxyde de butylène,
- les esters d'acide (méth) acrylique avec un alcool comprenant 1 à 12 atomes de carbone comme le (méth) acrylate de méthyle, le (méth) acrylate d'éthyle, le (méth) acrylate de propyle, le (méth) acrylate de n-butyle, le (méth) acrylate de t butyle, le (méth) acrylate d'isobutyle, l'acrylate de 2-éthylhexyl ;
- l'acétate de vinyle, le Versatate de vinyle, le propionate de vinyle, le chlorure de vinyle, le chlorure de vinylidène, le méthyl vinyléther, l'éthyl vinyléther ; -les nitriles vinyliques incluent plus particulièrement ceux ayant de 3 à 12 atomes de carbone, comme en particulier l'acrylonitrile et le méthacrylonitrile ;
- le styrène, l'α-méthylstyrène, le vinyltoluène, le butadiène, le chloroprène ; seuls ou en mélanges, ainsi que les macromonomères dérivant de tels monomères.

Les polymères dont dérivent les particules de microgel chimique peuvent être des homopolymères ou des copolymères.

De plus, leurs structure peut être de toute nature. Ainsi, les copolymères peuvent présenter une structure statistique ou à bloc. De plus, qu'ils comprennent ou non des monomères différents, les polymères peuvent être linéaires, ramifiés, de structure peigne ou encore étoile.

Le choix de la nature des monomères qui viennent d'tre détaillés, ainsi que leurs proportions respectives, peuvent être déterminés sans difficulté par l'homme du métier de manière à obtenir in fine un microgel chimique hydrosoluble ou hydrodispersable.

L'obtention des particules de microgel chimique va maintenant être décrite.

Selon un premier mode de réalisation, les particules de microgel chimiques sont obtenues en effectuant les étapes suivantes :
a) on prépare, en phase aqueuse, un gel chimique par polymérisation du ou des monomères souhaités et de l'agent réticulant, ou par réticulation post-polymérisation chimique d'un polymère,
b) on broie le gel résultant de manière à obtenir des particules de microgel chimique.

Il est précisé que les polymères dont dérivent les particules de microgel chimique sont, de manière avantageuse, obtenus en mettant en oeuvre des polymérisations radicalaires, bien que d'autres types de polymérisation soient parfaitement envisageables, comme les polymérisations par voie anionique, ou cationique.

Il est de même possible de mettre en oeuvre, selon les monomères employés, une polymérisation par transfert de groupe ou bien une polymérisation par ouverture de cycle (cas notamment de polymérisation à partir de cycle N-carboxy anhydride).

De préférence, les polymères sont obtenus en mettant en oeuvre au moins une étape de polymérisation radicalaire vivante.

A titre d'exemple de procédés de polymérisation dite vivante ou contrôlée, on peut notamment se référer à :
- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 98/01478, -le procédé de la demande WO 99/03894 qui met en oeuvre une polymérisation en présence de précurseurs nitroxydes,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiocarbazates de la demande WO 02/26836.
- le procédé de polymérisation radicalaire contrôlée par des agents de contrôle de type dithiophosphoroesters de la demande WO 02/10223,
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3,127 (1982),
- le procédé de polymérisation radicalaire contrôlée par transfert dégénératif d'iode selon l'enseignement de Tatemoto et al., Jap. 50,127, 991 (1975), Daikin Kogyo Co Itd Japan et Matyjaszewski et al., Macromolecules, 28,2093 (1995),
- le procédé de polymérisation radicalaire contrôlée par les dérivés du tetraphényléthane, divulgué par D. Braun et al. Dans Macromol. Symp. 111,63 (1996), ou encore,
- le procédé de polymérisation radicalaire contrôlée par des complexes organocobalt décrit par Wayland et al. Dans J. Am. Chem. Soc. 116, 7973 (1994).

De préférence, lorsque les polymères dont proviennent les particules de microgel chimique présentent une structure à blocs, la réaction de polymérisation mise en oeuvre pour les obtenir est effectuée en présence d'au moins un agent de contrôle du type notamment des composés xanthates, dithiocarbamates, dithioesters.

Dans le cas où les polymères ne présentent pas une telle structure, alors une polymérisation radicalaire classique est appropriée (c'est-à-dire sans agent de contrôle).

Selon une première variante de ce mode de réalisation, le polymère dont dérive les particules de microgel chimique sont obtenues en effectuant une polymérisation en phase aqueuse du ou des monomères souhaités et d'au moins un agent réticulant.

Dans ce cas de figure, la polymérisation et la réticulation sont réalisées simultanément.

On met en oeuvre les monomères listés auparavant dans le cadre de la description des polymères.

Les monomères réticulants utilisables possèdent au moins deux fonctions réactives dans le mode de polymérisation choisi. Dans le cas d'une polymérisation radicalaire, on utilise au moins un monomère comportant au moins deux insaturations éthyléniques et au plus 10 insaturations et connus comme étant réactifs par voie radicalaire.

De préférence, ces monomères présentent deux insaturations éthyléniques. On peut notamment citer les dérivés acryliques, méthacryliques, acrylamido, méthacrylamido, ester vinylique, éther vinylique, diénique, styrénique, alpha-méthyl styrénique et allylique.

Les monomères appartenant à ces familles sont le méthacrylate de vinyle, l'anhydride d'acide méthacrylique, le méthacrylate d'allyle, le diméthacrylate d'éthylèneglycol, le phénylène diméthacrylate, le diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1, 3-diméthacrylate de butanediol, le 1, 4-diméthacrylate de butanediol, le 1,6diméthacrylate de hexanediol, le 1, 12-diméthacrylate de dodécanediol, le 1,3diméthacrylate de glycérol, le diméthacrylate de diuréthane, le triméthacrylate de triméthylolpropane. Pour la famille des acrylates multifonctionnels, on peut notamment citer l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanediol, le diacrylate d'hexanediol, le diacrylate d'uréthane aliphatique, le triacrylate de triméthylolpropane, le triacrylate de triméthylolpropane éthoxylé, le triacrylate de triméthylolpropane propoxylé, le triacrylate de glycérol propoxylé, le triacrylate d'uréthane aliphatique, le tétraacrylate de triméthylolpropane, le pentaacrylate de dipentaérytritol. Concernant les éthers vinyliques, on peut notamment citer le vinyl crotonate, le diéthylène glycoldivinyléther, l'ether divinylique de butanediol1,4, le triéthylèneglycol divinyl éther. Pour les dérivés allyliques, on peut notamment citer le diallyl phtalate, le diallyldiméthylammonium chloride, le diallyl malléate, le sodium diallyloxyacetate, le diallylphenylphosphine, le diallylpyrocarbonate, le diallyl succinate, le N, N'-diallyltartardiamide, le N, N-diallyl-2,2,2-trifluoroacétamide, l'ester allylique du diallyloxy acide acétique, le 1, 3-diallylurée, la triallylamine, le triallyl trimesate, le triallyl cyanurate, le triallyl trimellitate, le triallyl-1,3,5-triazine-2,4,6 (1 H, 3H, 5H)-trione. Pour les dérivés acrylamido, on peut notamment citer le N, N'-méthylènebisacrylamide, le N, N'-méthylènebismethacrylamide, le glyoxal bisacrylamide, le diacrylamido acide acétique. En ce qui concerne les dérivés styréniques, on peut notamment citer le divinylbenzène et le 1, 3-diisopropénylbenzène. Dans le cas des monomères diéniques, on peut notamment citer le butadiène, le chloroprène et l'isoprène.

Comme monomères réticulants, on préfère le N, N'-méthylènebisacrylamide, le divinylbenzène et le diacrylate d'éthylène glycol.

En outre, la quantité d'agent réticulant peut être déterminée sans difficulté par l'homme du métier, selon le degré de réticulation souhaité et de telle sorte que les particules de microgel chimique que l'on souhaite obtenir in fine soient hydrosolubles ou hydrodispersables au sens indiqué auparavant.

La réaction de polymérisation est effectuée en présence d'au moins une source de radicaux libres. Cet initiateur de polymérisation radicalaire peut être choisi parmi les initiateurs classiquement utilisés en polymérisation radicalaire, comme :
* les peroxydes d'hydrogène, tels que l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium),
* les composés azoïques, comme par exemple : le 2-2'-azobis (isobutyronitrile), le 2,2'-azobis (2-butanenitrile), le 4,4'-azobis (4-acide pentanoïque), le 1,1'- azobis (cyclohexane-carbonitrile), le 2-(t-butylazo)-2-cyanopropane, le 2,2'-azobis[2-méthyl-N-(1,1)-bis (hydroxyméthyl)-2-hydroxyéthyl] propionamide, le 2,2'-azobis (2-méthyl-N-hydroxyéthyl]-propionamide, le dichlorure de 2, 2'-azobis (N, N'-diméthylène isobutyramidine), le dichlorure de 2,2'-azobis (2-amidinopropane), le 2,2'-azobis (N, N'diméthylèneisobutyramide), le 2,2'-azobis (2-méthyl-N- [1, 1-bis (hydroxyméthyl)-2hydroxy éthyl] propionamide), le 2,2'-azobis (2-méthyl-N- [1, 1-bis (hydroxyméthyl) éthyl] propionamide), le 2,2'-azobis [2-méthyl-N- (2-hydroxyéthyl) propionamide], le 2,2'-azobis (isobutyramide) dihydrate,
* les systèmes redox comportant des combinaisons telles que les mélanges de peroxyde d'hydrogène, et analogues avec un ou plusieurs sels de fer, sels titaneux etc., et des sucres réducteurs ; les persulfates, perborate ou perchlorate de métaux alcalins ou d'ammonium en association avec un bisulfite de métal alcalin et des sucres réducteurs ; les persulfate de métal alcalin en association avec un acide arylphosphinique et des sucres réducteurs.

Habituellement, la quantité d'initiateur à utiliser est déterminée de manière à ce que la quantité de radicaux créés soit d'au plus 50 % en mole, de préférence d'au plus 20 % en mole, par rapport à la quantité de polymère ou d'agent de contrôle.

La température peut varier entre la température ambiante et 150°C selon la nature des monomères utilisés.

La polymérisation est avantageusement réalisée en solution dans l'eau.

Selon une deuxième variante de ce premier mode de réalisation, le polymère dont dérive les particules de microgel chimique est préparé en effectuant une polymérisation en phase aqueuse du ou des monomères souhaités suivie d'une étape de réticulation dudit polymère (réticulation post-polymérisation).

Les agents réticulants précités peuvent être utilisés lors de cette étape.

Les conditions de mise en oeuvre de la réticulation sont du même type que celle de la réaction de polymérisation, à l'exception du fait que l'on n'introduit pas d'agent de contrôle.

Ainsi, on met en oeuvre la réticulation en présence d'au moins un initiateur, avec une teneur telle que la quantité de radicaux créés soit d'au plus 50 % en mole, de préférence d'au plus 20 % en mole, par rapport à la quantité de polymère.

Il est précisé que selon la nature des monomères formant le polymère, la réticulation peut consister en une réaction des fonctions du polymères entre elles. Il peut s'agir par exemple de réactions d'estérification ou de transestérification.

Dans ce cas de figure, on peut ajouter au polymère des catalyseurs particuliers à ces réactions, comme les acides ou les bases.

Selon une autre possibilité, la réticulation des polymères peut se faire via des composés multifonctionnels non polymérisables, portant au moins une fonction chimique antagoniste à celle (s) portée (s) par le polymère à réticuler. Par exemple, on peut mettre en oeuvre un composé diiodé pour réticuler un polymère portant au moins un bloc poly (2-diméthylaminoéthyl acrylate), ou encore du glutaraldéhyde pour réticuler un polymère de type alcool polyvinylique, etc.

Le polymère est séparé de manière classique du mélange réactionnel, par précipitation par exemple dans un non-solvant.

Une fois le polymère réticulé chimiquement obtenu, on effectue un broyage de ce dernier.

Cette opération est réalisée de manière classique. On peut utiliser des broyeurs classiques, mais aussi les ultra-sons.

Elle est en général effectuée avec un polymère en dispersion dans un non solvant.

Cette opération est effectuée pendant une durée suffisante pour obtenir une taille moyenne en nombre, de particules comprise entre 0, 3 µm et 10 mm, de préférence comprise entre 1 µm et 1000 µm, encore plus préférentiellement comprise entre 1 µm et 100 µm.

Selon un deuxième mode de réalisation, les particules de microgel chimiques sont obtenues en effectuant une polymérisation du ou des monomères souhaités et de l'agent réticulant dans des micro-réacteurs et/ou sous agitation et/ou en présence d'au moins un agent limitant, ou par réticulation post-polymérisation chimique dans des micro-réacteurs et/ou sous agitation, d'un polymère obtenu par polymérisation du ou des monomères souhaités.

Il est précisé que ledit polymère dont dérivent les particules de microgel chimique peut ou non tre obtenu en mettant en oeuvre une polymérisation dans des microréacteurs et/ou sous agitation.

Tout ce qui a été indiqué auparavant quant à la nature des monomères, des agents réticulants, de la présence ou non d'agent de contrôle reste valable dans le cas de ce deuxième mode de réalisation ; la différence étant essentiellement la manière dont sont réalisés les réactions de polymérisation, et éventuellement de réticulation.

En ce qui concerne l'agent limitant, ce dernier peut tre choisi parmi les agents de transfert radicalaire, par exemple des composés du type des thiols (voir l'enseignement de Sherrington, Polymer, 41 (2000)), ou encore parmi les agents de contrôle par exemple du type des nitroxydes (voir D. H. Solomon and coll. Macromol. Rapid Commun. 18,755 (1997) et Polymer 42,5987 (2001)). L'utilisation de tels agents empêche la formation de macrogels.

Ce deuxième mode de réalisation a pour objectif de pouvoir accéder à des particules de microgel chimique sans avoir à effectuer une étape de broyage du polymère. Pour atteindre cet objectif, la polymérisation est réalisée soit dans des microréacteurs, soit sous agitation, soit en présence d'un agent limitant, soit une combinaison de ces possibilités.

Les micro-réacteurs sont plus particulièrement les gouttelettes d'une émulsion, qui, dans le cas présent, est une émulsion inverse (eau dans huile).

Mettre en oeuvre des réactions de polymérisation en émulsion ne pose aucune difficulté en soi à l'homme du métier.

La phase organique est plus spécialement composée d'un solvant organique non miscible à l'eau, et inerte dans les conditions des réaction. A titre d'exemples, on peut citer l'hexane, l'heptane, les coupes isoparaffiniques, etc.

Par ailleurs, la phase organique de l'émulsion comprend en outre au moins un agent tensioactif.

De préférence, le tensioactif est choisi parmi ceux qui sont solubles au moins en partie dans la phase organique de l'émulsion.

De manière avantageuse, les tensioactifs susceptibles d'être mis en oeuvre dans ce mode de réalisation, sont plus particulièrement choisis parmi les tensioactifs non ioniques de faible HLB (plus particulièrement inférieure ou égale à 8).

Peuvent convenir les alcools gras alcoxylés, les triglycérides alcoxylés, les acides gras alcoxylés, les esters de sorbitan éventuellement alcoxylés, les amines grasses alcoxylées ; le nombre de motifs alcoxylés (oxyéthylénés, oxypropylénés, oxybutylénés) est tel que la valeur de HLB soit inférieure ou égale à 8.

Il est à noter que la réaction de polymérisation peut aussi être mise en oeuvre en utilisant un polymère amphiphile pour stabiliser l'émulsion inverse, seul ou en mélange avec l'un ou plusieurs des tensioactifs précités.

A titre d'exemple de tels polymères, on peut citer notamment les polymères triblocs polyhydroxystéarate-polyéthylène glycol-polyhydroxystéarate (les produits de la gamme Arlacel de ICI en sont un exemple).

Selon un mode de réalisation particulièrement avantageux, l'émulsion inverse comprend un polymère amphiphile ou un mélange de plusieurs d'entre eux.

La quantité totale de tensioactif et/ou de polymère amphiphile représente de préférence, de 2 à 10 % en poids de la phase huileuse.

Dans le cas où la polymérisation est effectuée sous agitation, cette dernière doit être suffisante pour cisailler le mélange réactionnel et faire en sorte que le polymère obtenu présente une taille appropriée.

Précisons que la combinaison de ces deux possibilités est envisageable.

Enfin, on ne sortirait pas du cadre de la présente invention en effectuant une étape de broyage sur les particules obtenues à l'issue de ces étapes.

Le deuxième constituant de la composition selon l'invention est le polymère pontant. Celui-ci est un polymère hydrosoluble ou hydrodispersable, de nature chimique différente de celle des particules de microgel chimique, qui viennent d'être décrites.

Précisons que le polymère pontant est considéré de composition (nature) chimique différente de celle des particules de microgel, si les compositions globales des polymères sont différentes soit par la nature des unités de répétitions, soit par les proportions respectives des unités de répétitions.

Par ailleurs, le polymère pontant et les particules de microgel chimique sont associés de manière au moins partiellement réversible. En effet, la composition comprenant le polymère pontant et les particules de microgel possède des caractéristiques rhéologiques telles que la différence entre la viscosité initiale et la viscosité après traitement cisaillant durant 5 minutes à 100 s-1 mesurée après un repos de 24 heures, est inférieure ou égale à 50%, de préférence inférieure ou égale à 20 % de la viscosité initiale.

Ainsi que cela a été indiqué auparavant, la quantité de polymère pontant est telle que la viscosité de la composition est au moins supérieure à trois fois celle d'une solution aqueuse de particules de microgel chimique et à celle d'une solution aqueuse de polymère pontant, dans les mêmes conditions (de concentration, de température).

De préférence, la viscosité de la composition est au moins supérieure ou égale à dix fois celle d'une solution aqueuse de particules de microgel chimique et à celle d'une solution aqueuse de polymère pontant, dans les mêmes conditions.

Le polymère pontant est plus particulièrement constitué d'au moins un polymère dont la masse molaire en poids est comprise entre 10³ et 5. 10⁷ g/mol, plus particulièrement entre 104 et 107 g/mol, de préférence entre 5.10⁵ et 5.10⁶ g/mol. Ces masses molaires en poids sont déterminée par la méthode MALLS (multi-angle light scattering) couplée à une chromatographie par perméation de gel.

Selon une caractéristique préférentielle de l'invention, le polymère pontant mis en oeuvre possède une structure linéaire, comprenant éventuellement des chaînes latérales pendantes (greffons).

Selon une première variante de l'invention, le polymère pontant est obtenu au moins à partir de monomères hydrophiles non ioniques, ioniques ou potentiellement ionisables, et éventuellement hydrophobes.

En ce qui concerne les monomères hydrophiles et hydrophobes mentionnés cidessus, on pourra se référer aux listes relatives à chacun de ces monomères, listes données lors de la description des polymères à partir desquels les particules de microgel chimique peuvent tre obtenues.

On pourra de même se reporter aux diverses méthodes de préparation des polymères, à ceci près que les polymères pontants ne sont pas des espèces réticulées.

On ne fera donc pas intervenir, de préférence, d'agent réticulant pendant ou après l'obtention desdits polymères.

Le choix du polymère pontant est réalisé en fonction de la nature du polymère réticulé constituant des particules de microgel chimique, de manière à avoir des interactions entre les deux composés, le polymère pontant et les particules de microgel chimique.

Par exemple, lorsque l'on souhaite avoir les particules de microgel chimique et le polymère pontant associés au moyen d'interactions de nature électrostatique, ces derniers seront choisis de telle sorte que la charge globale nette des particules de microgel chimique soit opposée à la charge globale nette du polymère pontant. Plus précisément, lorsque les particules de microgel chimique comprennent des motifs anioniques, le polymère pontant est choisi de telle façon qu'il comprenne dans certaines de ses unités de répétitions, des charges cationiques ou potentiellement cationiques (par exemple dans les conditions de pH de l'utilisation de la composition).

De manière avantageuse, le polymère pontant est tel qu'il présente un degré de polymérisation des monomères chargés compris entre 5 et 10.

De préférence, dans le cas de ce type d'interactions, au moins 50 % en nombre, de préférence au moins 80 % en nombre de monomères constituant la chaîne polymérique du polymère pontant et des particules de microgel chimique ne comprennent pas de charge ionique.

Selon une autre possibilité, les particules de microgel chimique et le polymère pontant sont associés au moyen d'interactions de type hydrophobe-hydrophobe. Dans ce cas, les particules de microgel et le polymère pontant comprennent des motifs susceptibles de s'associer en phase aqueuse par le moyen de telles liaisons.

A titre d'exemple de ce type d'interactions, on peut citer l'association de particules de microgel comprenant des chaînes alkyles longues (par exemple en C8 à C22 et plus) associées à un polymère pontant de type acrylate d'alkyle en Ce à C22 et plus, par exemple.

Selon une dernière possibilité, les particules de microgel chimique et le polymère pontant associés au moyen d'interactions de type liaison hydrogène. Selon cette variante, les particules de microgel chimique et le polymère pontant comprennent des motifs susceptibles de s'associer en phase aqueuse par le moyen de telles liaisons (par exemple motifs carboxylique et/ou amide et motifs éther et/ou alcool et/ou amine).

Dans ce cas, le polymère pontant et les particules microgel chimique comprennent des fonctions du type acide carboxylique, alcool, éther, amide, par exemple.

Selon une deuxième variante de l'invention, le polymère pontant comprend au moins un polymère choisi parmi les biopolymères modifiés chimiquement ou non.

Selon cette variante, les biopolymères sont choisis parmi les polysaccharides tels que les galactomannanes, les glucomannanes, les succinoglycanes, la gomme xanthane, la cellulose, les alginates, la gélatine, modifiés chimiquement ou non.

Le choix du biopolymère (non ionique, hydrophobe, anionique, cationique,...) sera fait en fonction de la nature de particules de microgel chimique, de manière à obtenir des interactions entre les particules et le polymère pontant du type de celles listées ci-dessus, à) savoir des interactions électrostatiques, hydrophobe-hydrophobe, liaison hydrogène.

La composition selon l'invention peut être obtenue en mettant en oeuvre les étapes suivantes :
a) on prépare, en phase aqueuse, un gel chimique par polymérisation du ou des monomères souhaités et de l'agent réticulant, ou par réticulation post-polymérisation chimique d'un polymère,
b) on broie le gel résultant de manière à obtenir des particules de microgel chimique ;
c) on met en contact, dans une phase aqueuse, lesdites particules de microgel chimique avec au moins un polymère pontant.

Selon une autre variante, la composition est obtenue en effectuant les étapes suivantes :
a) on prépare des particules de microgel chimique en effectuant une polymérisation du ou des monomères souhaités et de l'agent réticulant dans des micro-réacteurs et/ou sous agitation et/ou en présence d'au moins un agent limitant, ou par réticulation post-polymérisation chimique, dans des micro-réacteurs et/ou sous agitation, d'un polymère,
b) on met en contact, dans une phase aqueuse, lesdites particules de microgel chimique avec au moins un polymère pontant.

Pour chacune de ces deux possibilités, les deux premières étapes ont été déjà détaillées lors de la description des polymères à partir desquels sont obtenus les particules de microgel chimique.

Pour ce qui concerne la dernière étape, celle-ci est effectuée simplement en mélangeant le polymère pontant et les particules de microgel chimique.

L'invention concerne de même l'utilisation de la composition qui vient d'tre décrite, dans les domaines de l'exploitation de gisements de pétrole ou de gaz, de la détergence, de la cosmétique, le traitement du métal (transformation, déformation).

Enfin, un dernier objet de l'invention est constitué par des formulations comprenant ladite composition ; les formulations étant destinées aux domaines de l'exploitation de gisements de pétrole ou de gaz, de la détergence, de la cosmétique.

Des exemples concrets non limitatifs de l'invention vont maintenant être présentés.

### EXEMPLE 1 :

### Synthèse du microgel PAA/PHEA

### Etape 1 : synthèse d'un copolymère bloc PAA-b-PHEA (acide polyacrylique-bpolyhydroxyéthylacrylate) 5000-b-30000

### Synthèse du premier bloc

Dans un ballon tricol muni d'un réfrigérant, d'une agitation magnétique et d'un bain chauffant sont mis 30g d'acide acrylique (AA), 1, 255g de O-ethyl-S- (1- methoxycarbonyl) ethylenyl) xanthate (CH3CHCO2CH3)S(C=S)OEt, 0,147g d'AIBN et 125ml d'acétone. Le milieu est chauffé à 70 C pendant 20h. Le solvant est évaporé sous vide et le polymère est séché sous vide jusqu'à masse constante.

La masse molaire moyenne en nombre (Mn) est mesurée par chromatographie d'exclusion stérique (CES), en utilisant une calibration par des étalons de PAA linéaires.

Mn=4300 g/mol.

### Synthèse du dibloc

Dans un ballon tricol muni d'un réfrigérant, d'une agitation magnétique et d'un bain chauffant sont mis 10g de polyacide acrylique (PAA) à extrémité xanthate décrit ci-dessus, 74g d'eau distillée et 148g d'acétone.

Le milieu est porté à 70°C en 30 minutes.

A 70°C sont ajoutés en continu 69,8g d'acrylate d'hydroxyéthyle (HEA) sur 2h45 et en une fois (en « shot » ) 0,076g d'azoisobutyronitrile (AIBN). Deux portions d'AIBN de 0,076g chacune sont additionnées deux heures et quatre heures après le début de l'introduction du monomère. Le chauffage et l'agitation sont maintenus pendant 16h.

L'extrait sec final est de 26,4% en poids.

### Etape 2 : réticulation du copolymère bloc

La solution précédente de copolymère est laissée à 40°C pendant 30 jours à l'étuve. Un suivi par diffusion de lumière puis microscopie classique permet de suivre l'apparition des microgels dans le temps.

### Obtention du GEL

On prépare une solution aqueuse A contenant 3,2% en poids du microgel précédent à un pH de 7 (ajustement à l'aide d'une solution aqueuse de soude molaire).

On prépare une solution aqueuse B contenant 0,82% d'un polymère cationique, le Glokill PQ (commercialisé par RHODIA CHIMIE). La solution B est également amené à pH 7 à l'aide de soude.

On prépare alors la formulation aqueuse C en mélangeant une masse identique de A et de B.

On prépare également les formules A' et B' en diluant respectivement 2 fois les solutions A et B par de l'eau (pH constant =7).

| Formulations | Viscosité* (en Pa.s) |
|---|---|
| A' | <0,1 |
| B' | <0,1 |
| C | 10 |

| | |
|---|---|
| *les viscosités sont mesurées au moyen d'un viscosimètre de type Carrimed, avec une géométrie à cône-plan ; les mesures sont effectuées à 25 C à un gradient de cisaillement de 1 s⁻¹. | |

### EXEMPLE 2 :

### Synthèse du microgel PAA/Pam

### Etape 1 : synthèse d'un copolymère bloc PAA-b-PAm (acide polyacrylique-b-polyacrylamide) 5000-b-60000

### Synthèse du premier bloc

Dans un ballon tricol muni d'un réfrigérant, d'une agitation magnétique et d'un bain chauffant sont mis 7,7 g d'acide acrylique (AA), 0,32 g de O-ethyl-S-(1-methoxycarbonyl) ethylenyl) xanthate (CH3CHC02CH3)S(C=S)OEt, 0,22 g de 4,4'azobis (4-acide cyanovalérique), 2,5 g d'isopropanol et 16,7 g d'eau. Le milieu est chauffé à 70 C pendant 6h.

Un échantillon est prélevé et sa masse molaire moyenne en nombre (Mn) est mesurée par chromatographie d'exclusion stérique (CES), en utilisant une calibration par des étalons de PAA linéaires.

Mn=4500 g/mol.

### Synthèse du dibloc

Au polymère issu de l'étape 1, maintenu à 70 C, sont rajoutés 92,3 g d'acrylamide, 0,21 g de 4,4'-azobis (4-acide cyanovalérique) et 215,8 g d'eau. Le mélange est chauffé pendant 6 heures.

Un échantillon est prélevé et sa masse molaire moyenne en nombre (Mn) est mesurée : Mn=49000.

### Etape 2 : synthèse du microgel à base de PAA et de Pam.

10 g copolymère dibloc issu de l'étape 1 est dilué à 12% dans l'eau. 1,18 g de N, N-méthylènebis acrylamide et 20 mg de 4,4'-azobis (4-acide cyanovalérique) dont ajoutés à la solution de dibloc. Le mélange est alors chauffé 5 heures à 70°C.

Le produit ainsi préparé forme une solution limpide dans l'eau. Il n'a pu être filtré à l'aide d'un filtre pour GPC de taille 0,45 pm, preuve de la création d'un microgel.

### Obtention du GEL

On prépare une solution aqueuse A contenant 6% en poids du microgel précédent à un pH de 7 (ajustement à l'aide d'une solution aqueuse de soude molaire).

On prépare une solution aqueuse B contenant 1,6% d'un polymère cationique, le Glokill PQ (commercialisé par RHODIA CHIMIE). La solution B est également amené à pH 7 à l'aide de soude.

On prépare alors la formulation aqueuse C en mélangeant une masse identique de A et de B.

On prépare également les formules A' et B' en diluant respectivement 2 fois les solutions A et B par de l'eau (pH constant =7).

| Formulations | Viscosité* (en Pa.s) |
|---|---|
| A' | <3 |
| B' | <1 |
| C | >10 |

| | |
|---|---|
| *les viscosités sont mesurées au moyen d'un viscosimètre de type Carrimed, avec une géométrie à cône-plan ; les mesures sont effectuées à 25 C à un gradient de cisaillement de 1 s⁻¹. | |

## Revendications

1. Composition aqueuse comprenant des particules de microgel chimique, réticulé chimiquement, hydrosoluble ou hydrodispersable, associées à au moins un polymère pontant hydrosoluble ou hydrodispersable, de composition chimique différente de celle des particules précitées ;
- la quantité en particules de microgel chimique étant comprise entre 0,05 et 40 % en poids sec de la composition ;
- les particules de microgel chimique et le polymère pontant étant associés :
∘ par des interactions électrostatiques : la charge globale des particules de microgel chimique étant opposée à la charge globale de polymère pontant ; ou
∘ par des interactions de type hydrophobe-hydrophobe : les particules de microgel chimique et le polymère pontant comprenant des motifs susceptibles de s'associer en phase aqueuse par le moyen de telles interactions ; ou
∘ par des interactions de type liaisons hydrogène : les particules de microgel chimique et le polymère pontant comprenant des motifs susceptibles de s'associer en phase aqueuse par le moyen de telles liaisons ; et
- la quantité en polymère pontant étant telle que la viscosité de la composition est au moins supérieure à trois fois, de préférence supérieure ou égale à dix fois, celle d'une solution aqueuse de particules de microgel chimique et à celle d'une solution aqueuse de polymère pontant, dans les mêmes conditions.

2. Composition aqueuse selon la revendication précédente, **caractérisée en ce que** la quantité de particules de microgel chimique est comprise entre 0,05 et 10 % en poids sec de la composition, de préférence entre 0,1 et 5 % en poids sec de la composition.

3. Composition aqueuse selon l'une des revendications précédentes, **caractérisée en ce que** la quantité de polymère pontant est telle que le mélange particules de microgel chimique et polymère pontant est hydrosoluble ou hydrodispersable.

4. Composition selon la revendication précédente, **caractérisée en ce que** le nombre de motifs hydrosolubles dudit polymère représente au moins 50 % du nombre de motifs du polymère, de préférence d'au moins 80 % en poids du polymère.

5. Composition selon l'une des revendications précédentes, **caractérisée en ce que** les particules de microgel chimique ont une taille moyenne en nombre comprise entre 0, 3 µm et 10 mm, de préférence comprise entre 1 µm et 1000 µm, encore plus préférentiellement comprise entre 1 µm et 100 µm.

6. Composition selon l'une des revendications précédentes, **caractérisée en ce que** le polymère pontant est constitué d'au moins un polymère dont la masse molaire en poids théorique est comprise entre 10³ et 5. 10⁷g/mol, plus particulièrement entre 10⁴ et 10⁷ g/mol, de préférence entre 5.10⁵ et 5.10⁶ g/mol.

7. Composition selon l'une des revendications précédentes, **caractérisée en ce que** les polymères dont dérivent les particules de microgel chimique et le polymère pontant sont obtenus au moins à partir de monomères hydrophiles non ioniques, ioniques ou potentiellement ionisables, et éventuellement hydrophobes.

8. Composition selon la revendication précédente, **caractérisée en ce que** les monomères hydrophiles non ioniques peuvent être choisis parmi l'oxyde d'éthylène ; les amides des acides mono-ou poly-carboxyliques, linéaires, ramifiés, cycliques ou aromatiques, comprenant au moins une insaturation éthylénique ou dérivés, comme le (méth) acrylamide, le N-méthylol (méth) acrylamide ; certains esters dérivant de l'acide (méth) acrylique comme par exemple le (méth) acrylate de 2-hydroxyéthyle ; les esters vinyliques permettant d'obtenir des blocs alcool polyvinylique après hydrolyse, comme l'acétate de vinyle, le Versatate de vinyle, le propionate de vinyle, la Nvinylpyrrolidone, seuls ou en mélange.

9. Composition selon l'une des revendications 7 ou 8, **caractérisée en ce que** les monomères hydrophiles ioniques, ou potentiellement ioniques, sont choisis parmi les monomères anioniques ou potentiellement anioniques portant au moins une fonction carboxylique, sulfonique, sulfurique, phosphonique, phosphorique, sulfosuccinique, les sels correspondants, ou les précurseurs correspondants.

10. Composition selon la revendication précédente, **caractérisée en ce que** les monomères anioniques ou potentiellement anioniques sont choisis parmi :
- les acides mono-ou poly-carboxyliques linéaires, ramifiés, cycliques ou aromatiques, les dérivés N-substitués de tels acides, les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
seuls ou en mélanges, leurs dérivés sulfoniques ou phosphoniques, les macromonomères dérivant de tels monomères, les sels ou les précurseurs de ces monomères.

11. Composition selon l'une des revendications 7 à 10, **caractérisée en ce que** les monomères hydrophiles ioniques, ou potentiellement ioniques, sont choisis parmi les monomères cationiques ou potentiellement cationiques suivants :
- les (méth) acrylates d'aminoalkyle, les (méth) acrylamides d'aminoalkyle ;
- les monomères comprenant au moins une fonction amine secondaire, tertiaire ou quaternaire, ou un groupe hétérocyclique contenant un atome d'azote, la vinylamine, l'éthylène imine ;
- les sels d'ammonium de diallyldialkyl ;
seuls ou en mélanges, ainsi que les macromonomères dérivant de tels monomères, les sels de ces monomères.

12. Composition selon l'une des revendications 7 à 11, **caractérisée en ce que** les monomères hydrophiles ioniques, ou potentiellement ioniques, comprennent un ou plusieurs monomères amphotères et/ou zwiterrioniques.

13. Composition selon l'une des revendications 7 à 12, **caractérisée en ce que** les polymères dont dérivent les particules polymériques et l'espèce pontante sont obtenus au moins à partir de monomères hydrophobes choisis parmi :
- l'oxyde de propylène, l'oxyde de butylène, les esters des acides mono-ou poly-carboxyliques, linéaires, ramifiés, cycliques ou aromatiques, comprenant au moins une insaturation éthylénique,
- les nitrites αβ-éthyténiquement insaturés, les éthers vinyliques, les esters vinyliques, les monomères vinylaromatiques, les halogénures de vinyle ou de vinylidène,
- les monomères hydrocarbonés, linéaires ou ramifiés, aromatiques ou non, comprenant au moins une insaturation éthylénique, seuls ou en mélanges, ainsi que les macromonomères dérivant de tels monomères.

14. Composition selon l'une des revendications précédentes, **caractérisée en ce que** le polymère pontant comprend au moins un polymère choisi parmi les biopolymères modifiés chimiquement ou non.

15. Composition selon la revendication précédente, **caractérisée en ce que** les biopolymères sont choisis parmi les polysaccharides tels que les galactomannanes, les glucomannanes, les succinoglycanes, la gomme xanthane, la cellulose, les alginates, la gélatine, modifiés chimiquement ou non.

16. Procédé de préparation de la composition selon l'une des revendications précédentes, **caractérisé en ce que** l'on met en oeuvre les étapes suivantes :
a) on prépare, en phase aqueuse, un gel chimique par polymérisation du ou des monomères souhaités et de l'agent réticulant, ou par réticulation post-polymérisation chimique d'un polymère,
b) on broie le gel résultant de manière à obtenir des particules de microgel chimique ;
c) on met en contact, dans une phase aqueuse, lesdites particules de microgel chimique avec au moins un polymère pontant.

17. Procédé de préparation de la composition selon l'une des revendications 1 à 15, **caractérisé en ce que** l'on met en oeuvre les étapes suivantes :
a) on prépare des particules de microgel chimique en effectuant une polymérisation du ou des monomères souhaités et de l'agent réticulant dans des micro-réacteurs et/ou sous agitation et/ou en présence d'au moins un agent limitant, ou par réticulation postpolymérisation chimique, dans des micro-réacteurs et/ou sous agitation, d'un polymère,
b) on met en contact, dans une phase aqueuse, lesdites particules de microgel chimique avec au moins un polymère pontant.

18. Utilisation de la composition selon l'une des revendications 1 à 15, dans les domaines de l'exploitation de gisements de pétrole ou de gaz, de la détergence, de la cosmétique, le traitement du métal.

## Patentansprüche

1. Wässrige Zusammensetzung, umfassend Partikel eines wasserlöslichen oder - dispergierbaren, chemisch vernetzten chemischen Mikrogels, die mit mindestens einem wasserlöslichen oder -dispergierbaren Überbrückungspolymer verbunden sind, das eine andere chemische Zusammensetzung aufweist als die der Partikel;
- wobei die chemische Mikrogelpartikel in einer Menge von 0,05 - 40 % bezogen auf das Trockengewicht der Zusammensetzung vorliegen;
- wobei die chemischen Mikrogelpartikel und das Überbrückungspolymer verbunden sind:
∘ über elektrostatische Wechselwirkungen, wobei die globale Ladung der chemischen Mikrogelpartikel der des Überbrückungspolymers entgegengesetzt ist;
∘ oder über Hydrophob-Hydrophob-Wechselwirkungen, wobei die chemischen Mikrogelpartikel und das Überbrückungspolymer Motive umfassen, die geeignet sind, sich in der wässrigen Phase mittels derartiger Wechselwirkungen miteinander zu verbinden; oder
∘ über Wasserstoffbrücken-Wechselwirkungen, wobei die chemischen Mikrogelpartikel und das Überbrückungspolymer Motive umfassen, die geeignet sind, sich in der wässrigen Phase mittels derartiger Bindungen miteinander zu verbinden, und
- wobei das Überbrückungspolymer in einer derartigen Menge vorliegt, dass die Viskosität der Zusammensetzung die einer wässrigen Lösung aus chemischen Mikrogelpartikeln und die einer wässrigen Lösung aus Überbrückungspolymer unter gleichen Bedingungen mindestens um ein Dreifaches, vorzugsweise um mindestens ein Zehnfaches übersteigt.

2. Zusammensetzung nach dem vorstehenden Anspruch, **dadurch gekennzeichnet, dass** die chemischen Mikrogelpartikel bezogen auf das Trockengewicht der Zusammensetzung in einer Menge von 0,05 - 10 %, vorzugsweise 0,1 - 5 %, vorliegen.

3. Zusammensetzung nach einem der vorstehenden Ansprüche, **dadurch gekennzeichnet, dass** das Überbrückungspolymer in einer derartigen Menge vorliegt, dass die Mischung aus chemischen Mikrogelpartikeln und Überbrückungspolymer wasserlöslich oder -dispergierbar ist.

4. Zusammensetzung nach dem vorstehenden Anspruch, **dadurch gekennzeichnet, dass** die Anzahl der wasserlöslichen Motive des Polymers mindestens 50 Gew. %, vorzugsweise mindestens 80 Gew. % der Anzahl Motive des Polymers beträgt.

5. Zusammensetzung nach einem der vorstehenden Ansprüche, **dadurch gekennzeichnet, dass** die chemischen Mikrogelpartikel eine Durchschnittsgröße zwischen 0,3 µm und 10 mm, vorzugsweise zwischen 1 µm und 1000 µm, besonders bevorzugt zwischen 1 µm und 100 µm aufweisen.

6. Zusammensetzung nach einem der vorstehenden Ansprüche, **dadurch gekennzeichnet, dass** das Überbrückungspolymer aus mindestens einem Polymer besteht, dessen gewichtsbezogene theoretische Molmasse 10³ - 5 x 10⁷ g/mol, insbesondere 10⁴ - 10⁷ g/mol, besonders bevorzugt 5 x 10⁵ - 5 x10 ⁶ g/mol beträgt.

7. Zusammensetzung nach einem der vorstehenden Ansprüche, **dadurch gekennzeichnet, dass** die Polymere, aus denen die chemischen Mikrogelpartikel und das Überbrückungspolymer abgeleitet sind, sich mindestens aus hydrophilen, nicht ionischen, ionischen, oder möglicherweise ionisierbaren und evtl. hydrophoben Monomeren zusammensetzen.

8. Zusammensetzung nach dem vorstehenden Anspruch, **dadurch gekennzeichnet, dass** die nicht ionischen hydrophilen Monomere aus der nachfolgenden Gruppe gewählt sein können: Ethylenoxid, lineare, verzweigte, zyklische oder aromatische Mono- oder Polycarbonsäureamide, umfassend mindestens eine ethylenische ungesättigte Stelle oder deren Derivate, z.B. (Meth-) Acrylamid, N-Methylol(meth-)acrylamid; bestimmten aus (Meth-) Acrylsäure abgeleiteten Estern, z.B. 2-Hydroxyethyl (-meth-) -acrylat; Vinylestern, die nach der Hydrolyse Polyvinylalkoholblöcke ergeben wie z.B. Vinylacetat, Vinylversatat, Vinylpropionat, N-Vinylpyrrolidon, einzeln oder in einer Mischung.

9. Zusammensetzung nach einem der Ansprüche 7 oder 8, **dadurch gekennzeichnet, dass** die ionischen bzw. potenziell ionischen, hydrophilen Monomere aus der nachfolgenden Gruppe gewählt sind: potenziell anionische Monomere mit mindestens einem Carbonsäure-, Sulfonsäure-, Schwefelsäure-, Phosphonsäure-, Phosphorsäure oder Sulfobernsteinsäureanteil, die entsprechenden Salze oder die entsprechenden Präkursoren.

10. Zusammensetzung nach dem vorstehenden Anspruch, **dadurch gekennzeichnet, dass** die potenziell anionischen Monomere aus der nachfolgenden Gruppe gewählt sind:
- lineare, verzweigte, zyklische oder aromatische Mono- oder Polycarbonsäuren, deren N-substituierte Derivate, Polycarbonsäuremonoester, die mindestens eine ethylenische ungesättigte Stelle umfassen;
- lineare, verzweigte, zyklische oder aromatische Vinylcarbonsäuren;
- Aminosäuren mit mindestens einer ethylenischen ungesättigten Stelle;
allein oder in Mischungen, deren sulfonische oder phosphonische Derivate, aus diesen Monomeren abgeleitete Makromonomere, Salze oder Präkursoren dieser Monomere.

11. Zusammensetzung nach einem der Ansprüche 7 - 10, **dadurch gekennzeichnet, dass** die (potenziell) ionischen hydrophilen Monomere aus den nachfolgenden (potenziell) kationischen Monomeren gewählt sind:
- Aminoalkyl(meth)acrylate und -acrylamide;
- Monomere, die mindestens einen sekundären, tertiären oder quaternären Aminanteil oder eine heterozyklische Gruppe mit einem Stickstoffatom umfassen, Vinylamin, Ethylenimin;
- Diallyldialkylammoniumsalze;
allein oder in Mischungen, sowie die aus diesen Monomeren abgeleiteten Makromonomere, Salze oder Präkursoren dieser Monomere.

12. Zusammensetzung nach einem der Ansprüche 7 - 11, **dadurch gekennzeichnet, dass** die (potenziell) ionischen hydrophilen Monomere mindestens ein amphoteres und/oder zwitterionisches Monomer umfassen.

13. Zusammensetzung nach einem der Ansprüche 7 - 12, **dadurch gekennzeichnet, dass** die Polymere, aus denen die Polymerpartikel und die Überbrückungsspezies abgeleitet sind, sich mindestens aus hydrophoben Monomeren ergeben, die aus der nachfolgenden Gruppe gewählt sind:
- Propylenoxid, Butylenoxid, lineare, verzweigte, zyklische oder aromatische Mono- oder Polycarbonsäureester, umfssend mindestens eine ethylenische ungesättigte Stelle.
- αβ-ethylenisch ungesättigte Nitrite, Vinylether, Vinylester, vinylaromatische Monomere, Vinyl- oder Vinylidenhalogenide;
- lineare oder verzweigte, aromatische oder nicht aromatische Kohlenwasserstoffmonomere, umfassend mindestens eine ethylenische ungesättigte Stelle, allein oder in Mischungen, sowie die aus diesen Monomeren abgeleiteten Makromonomere.

14. Zusammensetzung nach einem der vorstehenden Ansprüche, **dadurch gekennzeichnet, dass** das Überbrückungspolymer mindestens ein aus chemisch modifizierten oder nicht chemisch modifizierten Biopolymeren gewähltes Polymer umfasst.

15. Zusammensetzung nach dem vorstehenden Anspruch, **dadurch gekennzeichnet, dass** die Biopolymere aus der nachfolgenden Gruppe gewählt sind: Polysaccharide wie z.B. Galactomannane, Glucomannane, Succinoglycane, Xanthan, Cellulose, Alginate, Gelatine, ob chemisch modifiziert oder nicht.

16. Verfahren zur Herstellung der Zusammensetzung nach einem der vorstehenden Ansprüche, **gekennzeichnet durch** die nachfolgenden Schritte:
a) Herstellen eines chemischen Gels in einer wässrigen Phase **durch** Polymerisierung des mindestens einen gewünschten Monomers und des Vernetzers oder **durch** chemisches Vernetzen eines Polymers nach der Polymerisierung,
b) Zermahlen des resultierenden Gels, um chemische Mikrogelpartikel zu ergeben;
c) Kontaktieren der chemischen Mikrogelpartikel mit mindestens einem Überbrückungspolymer in einer wässrigen Phase.

17. Verfahren zur Herstellung der Zusammensetzung nach einem der Ansprüche 1 - 15, **gekennzeichnet durch** die nachfolgenden Schritte:
a) Herstellen chemischer Mikrogelpartikel **durch** Polymerisieren des mindestens einen gewünschten Monomers und des Vernetzers in Mikroreaktoren und/oder unter Rühren und/oder in Gegenwart mindestens eines Begrenzungsmittels oder **durch** chemische Vernetzung eines Polymers nach der Polymerisierung in Mikroreaktoren und/oder unter Rühren ;
b) Kontaktieren der chemischen Mikrogelpartikel mit mindestens einem Überbrückungspolymer in einer wässrigen Phase.

18. Einsatz der Zusammensetzung nach einem der Ansprüche 1 - 15 auf dem Gebiet der Öl- oder Gasgewinnung, Reinigung, Kosmetik oder Metallbearbeitung.

## Claims

1. An aqueous composition comprising chemical microgel particles, chemically cross-linked, water-soluble, or water-dispersible, associated with at least one water-soluble, or water-dispersible bridging polymer, with a different chemical composition from that of the aforementioned particles;
- the amount of chemical microgel particles being comprised between 0.05 and 40% by dry weight of the composition;
- the chemical microgel particles and the bridging polymer being associated:
• by electrostatic interactions: the global charge of the chemical microgel particles being opposed to the global charge of bridging polymer; or
• by interactions of the hydrophobic-hydrophobic type: the chemical microgel particles and the bridging polymer comprising units which may be associated in an aqueous phase by means of such links; or
• by interactions of the hydrogen bond type: the chemical microgel particles and the bridging polymer comprising units which may be associated in an aqueous phase by means of such links; and
- the amount of bridging polymer being such that the viscosity of the composition is at least three times greater, preferably ten times greater than that of an aqueous solution of chemical microgel particles and than that of an aqueous solution of bridging polymer, under the same conditions.

2. The aqueous composition according to the preceding claim, **characterized in that** the amount of chemical microgel particles is comprised between 0.05 and 10% by dry weight of the composition, preferably between 0.1 and 5% by dry weight of the composition.

3. The aqueous composition according to one of the preceding claims, **characterized in that** the amount of bridging polymer is such that the mixture of chemical microgel particles and of bridging polymer is water-soluble or water-dispersible.

4. The composition according to the preceding claim, **characterized in that** the number of water-soluble units of said polymer represents at least 50% of the number of polymer units, preferably of at least 80% by weight of the polymer.

5. The composition according to one of the preceding claims, **characterized in that** the chemical microgel particles have a number average size comprised between 0.3 µm and 10 mm, preferably comprised between 1 µm and 1000 µm, still more preferentially comprised between 1 µm and 100 µm.

6. The composition according to one of the preceding claims, **characterized in that** the bridging polymer consists of at least one polymer, for which the theoretical molar mass by weight is comprised between 10³ and 5.10⁷ g/mol, more particularly between 10⁴ and 10⁷ g/mol, preferably between 5.10⁵ and 5.10⁶ g/mol.

7. The composition according to one of the preceding claims, **characterized in that** the polymers from which are derived the chemical microgel particles and the bridging polymer are obtained at least from non-ionic, ionic or potentially ionizable hydrophilic monomers and optionally hydrophobic.

8. The composition according to the preceding claim, **characterized in that** the non-ionic hydrophilic monomers may be selected from among ethylene oxide; amides of linear, branched, cyclic or aromatic mono- or poly-carboxylic acids, comprising at least one ethylenic unsaturation or derivatives, like (meth)acrylamide, N-methylol(meth)acrylamide; certain esters derived from (meth)acrylic acid like for example 2-hydroxyethyl (meth)acrylate; vinyl esters giving the possibility of obtaining polyvinyl alcohol blocks after hydrolysis, like vinyl acetate, vinyl versatate, vinyl propionate, N-vinylpyrrolidone, either alone or as a mixture.

9. The composition according to one of claims 7 or 8, **characterized in that** ionic or potentially ionic hydrophilic monomers are selected from among anionic or potentially anionic monomers bearing at least one carboxylic, sulfonic, sulfuric, phosphonic, phosphoric, sulfosuccinic function and corresponding salts, or corresponding precursors.

10. The composition according to the preceding claim, **characterized in that** the anionic or potentially anionic monomers are selected from among:
- linear, branched, cyclic or aromatic mono- or poly-carboxylic acids, N-substituted derivatives of such acids, mono-esters of polycarboxylic acids, comprising at least one ethylenic unsaturation;
- linear, branched, cyclic or aromatic vinyl carboxylic acids;
- aminoacids comprising one or several ethylenic unsaturations;
alone or as mixtures, their sulfonic or phosphonic derivatives, macromonomers derived from such monomers, salts or precursors.

11. The composition according to one of claims 7 to 10, **characterized in that** ionic or potentially ionic hydrophilic monomers are selected from among the following cationic or potentially cationic monomers:
- aminoalkyl (meth)acrylates, aminoalkyl (meth)acrylamides;
- monomers comprising at least one secondary, tertiary or quaternary amine function or a heterocyclic group containing a nitrogen atom, vinylamine, ethylene imine;
- diallyldialkylammonium salts;
alone or as mixtures, as well as macromonomers derived from such monomers, salts of these monomers.

12. The composition according to one of claims 7 to 11, **characterized in that** the ionic, or potentially ionic hydrophilic monomers comprise one or several amphoteric and/or zwitterionic monomers.

13. The composition according to one of claims 7 to 12, **characterized in that** the polymers from which are derived the polymeric particles and the bridging species are obtained at least from hydrophobic monomers selected from among:
- propylene oxide, butylene oxide, esters of linear, branched, cyclic or aromatic mono-or poly-carboxylic acids comprising at least one ethylenic unsaturation,
- α,β-ethylenically unsaturated nitrites, vinyl ethers, vinyl esters, vinylaromatic monomers, vinyl or vinylidene halides,
- linear or branched, either aromatic or not, hydrocarbon monomers, comprising at least one ethylenic unsaturation, alone or as mixtures, as well as a macromonomers derived from such monomers.

14. The composition according to one of the preceding claims, **characterized in that** the bridging polymer comprises at least one polymer selected from among biopolymers either chemically modified or not.

15. The composition according to the preceding claim, **characterized in that** the biopolymers are selected from among polysaccharides such as galactomannans, glucomannans, succinoglycans, xanthan gum, cellulose, alginates, gelatin, either chemically modified or not.

16. A method for preparing the composition according to one of the preceding claims, **characterized in that** the following steps are applied:
a) a chemical gel in an aqueous phase, is prepared by polymerization of the desired monomer(s) and of the cross-linking agent, or by chemical post-polymerization cross-linking of a polymer,
b) the resulting gel is milled so as to obtain chemical microgel particles,
c) said chemical microgel particles are put into contact, in an aqueous phase, with at least one bridging polymer.

17. A method for preparing the composition according to one of claims 1 to 15, **characterized in that** the following steps are applied:
a) chemical microgel particles are prepared by carrying out polymerization of the desired monomer(s) and of the cross-linking agent in micro-reactors and/or with stirring and/or in the presence of at least one limiting agent, or by chemical post-polymerization cross-linking, in micro-reactors and/or with stirring, of a polymer,
b) said chemical microgel particles are put into contact, in an aqueous phase, with at least one bridging polymer.

18. The use of the composition according to one of claims 1 to 15, in the fields of operating extraction from oll or gas deposits, of detergency, cosmetics, metal treatment.
